# EUROPÄISCHE PATENTSCHRIFT

(11) **EP 2 761 199 B1**
(45) Veröffentlichungstag und Bekanntmachung des Hinweises auf die Patenterteilung: **17.05.2017**
(21) Anmeldenummer: 12762627.3
(22) Anmeldetag: 27.09.2012
(51) Int. Cl.: F16D 65/092, F16D 65/097

(54) **SCHEIBENBREMSE FÜR EIN NUTZFAHRZEUG**
DISK BRAKE FOR A COMMERCIAL VEHICLE
FREIN À DISQUE POUR VÉHICULE UTILITAIRE

(30) Priorität: 28.09.2011 DE 102011115212
(43) Veröffentlichungstag der Anmeldung: 06.08.2014
(73) Patentinhaber: KNORR-BREMSE Systeme für Nutzfahrzeuge GmbH, 80809 München (DE)
(72) Erfinder: SCHOENAUER, Manfred, 80995 München (DE); BARTEL, Markus, 72657 Altenriet (DE)
(86) Internationale Anmeldenummer: PCT/EP2012/069090
(87) Internationale Veröffentlichungsnummer: WO 2013/045555

(56) Entgegenhaltungen:
- EP-A1- 1 441 142
- WO-A1-97/13078
- DE-A1- 19 628 804

## Beschreibung

Die Erfindung betrifft eine Scheibenbremse für ein Nutzfahrzeug nach dem Oberbegriff des Anspruchs 1.

Eine Scheibenbremse ist in der EP 1 994 301 B1 geoffenbart. Darin wird vorgeschlagen, ein an einer Stellspindel des Bremsstempels angeschlossenes, dazu verdrehbares Druckstück als Formschlusselement mit einer Profilierung zu versehen, die in eine daran angepasste Profilierung einer Belagträgerplatte eines zuspannseitigen Bremsbelags eingreift. Dadurch wird erreicht, dass die auf eine Brücke der Zuspanneinrichtung, in der der Bremsstempel gelagert ist, einwirkenden Biegekräfte verringert werden, gleichzeitig sich jedoch der Bremsbelag an einem Bremsträgerhorn eines ortsfesten, den Bremssattel tragenden Bremsträgers abstützt.

Die beim Bremsen auftretenden, insbesondere in Umfangsrichtung der Bremsscheibe wirkenden Kräfte führen zu einer erheblichen Belastung der Profilierungen und in der Folge zu deren Verschleiß, durch den sich die Profilierung derart abnutzt, dass der Formschluss in dem erforderlichen Maße nicht mehr gegeben ist.

Damit besteht die Gefahr eines Verklemmens des Bremsbelages zwischen dem Bremsstempel und der Bremsscheibe, was zu einem Heißlaufen der Scheibenbremse und deren Beschädigung bis hin zum Funktionsausfall führen kann.

Während der Bremsbelag als Verschleißteil bei Erreichen einer vorgegebenen Minimaldicke eines an der Belagträgerplatte angebrachten Reibbelages ausgetauscht wird, üblicherweise bei unverschlissener Profilierung der Belagträgerplatte, verbleibt der Bremsstempel einschließlich des angeschlossenen Formschlusselementes dauerhaft im Bremssattel bzw. der Zuspannvorrichtung, so dass sich der erwähnte Verschleiß des Formschlusselementes mit zunehmender Betriebsdauer verstärkt, mit den geschilderten Folgen.

Gerade, weil es sich bei einer Scheibenbremse um ein sicherheitsrelevantes Funktionsteil handelt, kommt diesem Umstand eine besondere Bedeutung zu.

Aus der WO 97/13078 A1 ist eine Scheibenbremse nach dem Oberbegriff des Anspruchs 1 bekannt. Darin wird vorgeschlagen das Formschlusselement als austauschbaren Einsatz auszubilden, der einen in ein Druckstück eingepressten Zapfen und einen daran angeformten hammerartigen Kopf aufweist, der formschlüssig in eine Belagträgerplatte eines Bremsbelages eingreift.

Der Erfindung liegt die Aufgabe zugrunde, eine Scheibenbremse der gattungsgemäßen Art so weiterzuentwickeln, dass ihre Funktionssicherheit verbessert wird.

Diese Aufgabe wird durch eine Scheibenbremse mit den Merkmalen des Anspruchs 1 gelöst.

Durch die Erfindung, die im Übrigen auch fertigungstechnisch relativ einfach und kostengünstig zu realisieren ist, besteht die Möglichkeit, vor Erreichen einer Verschleißgrenze das Formschlusselement auszutauschen, d.h., ein installiertes durch ein neues zu ersetzen. Dabei kann der Austausch prinzipiell dann erfolgen, wenn auch der Bremsbelag ausgetauscht werden muss, wobei erfahrungsgemäß der Verschleiß des Formschlusselementes bis dahin noch nicht in einem Maße fortgeschritten ist, dass die Funktionssicherheit eingeschränkt bzw. gefährdet wäre.

Prinzipiell möglich ist der Austausch des dann insgesamt als Formschlusselement fungierenden Druckstücks, das verdrehbar, jedoch axial gesichert an der Stellspindel gehalten ist.

Das Formschlusselement besteht aus einem zentral im Druckstück gehaltenen Einsatz, der mit dem Druckstück lösbar verbunden ist. Während der Einsatz die für den Formschluss mit der Belagträgerplatte notwendige Profilierung besitzt, ist das Druckstück im angrenzenden Anlagebereich mit der Belagträgerplatte flächig ausgebildet.

Der Einsatz kann aus magnetischem oder unmagnetischem Material bestehen, während das Druckstück entsprechend gegenpolig ausgebildet ist, so dass der Einsatz magnetisch am Druckstück gehalten wird. Denkbar ist jedoch auch, dass der Einsatz mit dem Druckstück verpresst oder verklebt ist.

Nach der Erfindung ist der Einsatz topfförmig ausgebildet, wobei der umlaufende, axial ausgerichtete Wandbereich außenseitig eine Anlagefläche zur Verbindung mit dem Druckstück bildet.

Des Weiteren übernimmt der Einsatz Lagerungsfunktion gegenüber der Stellspindel, wobei ein Druckstücklager, beispielsweise in Form eines Lagerringes, in dem topfartigen Einsatz integriert ist und dieser gemeinsam mit dem Druckstücklager als Ring auf einen stirnseitigen Zapfen der Stellspindel aufgesteckt ist. Dabei kann das Druckstücklager aus einer auf die Innenseite der Wandung des Einsatzes oder des Zapfens aufgebrachten Gleitschicht gebildet sein.

Bevorzugt ist der Einsatz hermetisch abgedichtet im Druckstück gehalten, so dass kein Schmutz und keine Feuchtigkeit in den Verbindungsbereich mit der Stellspindel gelangen können.

Unabhängig von der Ausgestaltung bzw. Befestigung des Formschlusselementes ist erfindungsgemäß die Möglichkeit des Austausches bei Bedarf, wodurch die zum Stand der Technik beschriebenen Probleme wirkungsvoll verhindert werden. Insbesondere ist durch die Erfindung eine bemerkenswerte Verbesserung der Betriebs- bzw. Funktionssicherheit der Scheibenbremse insgesamt gegeben. Hierzu trägt auch bei, dass bei entsprechender Formgebung der Profilierung Formschlusselement/Belagträgerplatte ein Herausdrehen des Bremsbelages bei einer Bremsung verhindert wird. Überdies können bei rechtzeitigem Austausch des Formschlusselementes weitergehende, durch dessen Verschleiß bedingte Reparaturarbeiten bis hin zum Totalersatz der Scheibenbremse mit einfachen Mitteln verhindert werden.

Damit wird durch die Erfindung nicht nur den Anforderungen an eine optimierte Betriebssicherheit, sondern auch den Anforderungen an einen kostenoptimierten Betrieb der Scheibenbremse entsprochen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben. Es zeigen:
- Figur 1: eine Scheibenbremse in einer teilweise geschnittenen Draufsicht
- Figuren 2-4:: verschiedene Ausführungsbeispiele als Einzelheit, in geschnittener bzw. perspektivischer Ansicht.
- Figur 5:: Ausführungsbeispiel der Erfindung als Einzeleinheit, in geschnittener bzw. perpektivischer Ansicht.

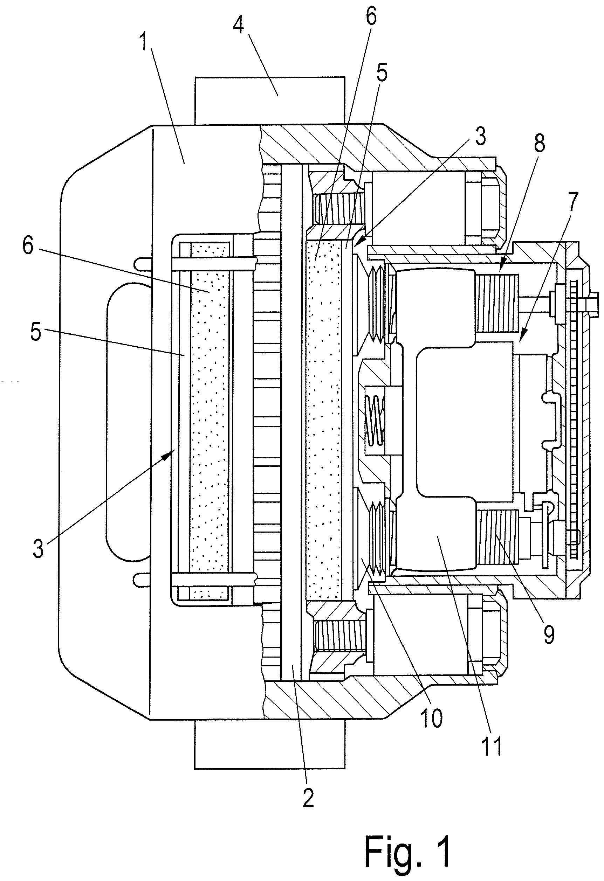

In der Figur 1 ist schematisch eine Scheibenbremse für ein Nutzfahrzeug dargestellt, mit einem eine Bremsscheibe 2 übergreifenden Bremssattel, in dem beidseitig der Bremsscheibe 2 positionierte und in Belagschächten eines ortsfesten Bremsträgers 4 gelagerte Bremsbeläge 3 angeordnet sind, von denen ein zuspannseitiger mittels einer Zuspanneinrichtung 7 bei einer Bremsung gegen die Bremsscheibe 2 pressbar ist. Der gegenüberliegende, reaktionsseitige Bremsbelag 3 wird über den verschieblich am Bremsträger 4 gehaltenen Bremssattel 1 anschließend ebenfalls an die Bremsscheibe 2 gepresst.

Die Zuspanneinrichtung 7 weist zwei parallel und abständig zueinander angeordnete Bremsstempel 8 auf, jeweils bestehend aus einer verdrehbar in einer Brücke 11 der Zuspanneinrichtung 7 gehaltenen Stellspindel 9, an deren dem zuspannseitigen Bremsbelag 3 zugewandter Stirnseite ein Druckstück 10 angeschlossen ist.

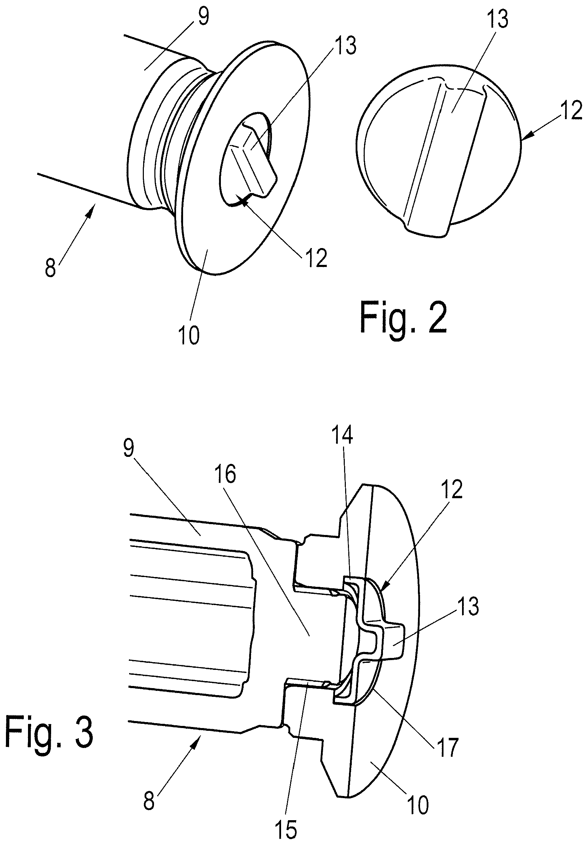

Wie insbesondere die Figuren 2-5 wiedergeben, weist der Bremsstempel 8 im Bereich seines Druckstücks 10 ein Formschlusselement 12 auf, das formschlüssig in eine Profilierung einer Belagträgerplatte 5 eingreift, die einen die Bremsscheibe 2 kontaktierenden Reibbelag 6 trägt. Das Formschlusselement 12 ist austauschbar, wobei die in den Figuren 2-5 gezeigten Varianten des Formschlusselementes 12 aus einem in das Druckstück 10 eingelassenen Einsatz besteht, mit einer gegenüber der freien Stirnseite des Druckstücks 10 erhabenen Profilierung 13.

In der Figur 2a) ist das Formschlusselement 12 in im Druckstück 10 montierter Stellung gezeigt, während die Figur 2b) das Formschlusselement 12 als Einzelheit wiedergibt.

Bei allen Beispielen ist das Formschlusselement 12 topfartig ausgebildet, mit einer umlaufenden, axial ausgerichteten Wandung 14, die an einer Wandung einer Ausnehmung 17 des Druckstücks 10 anliegt. Dabei kann die Verbindung zwischen dem Formschlusselement 12 und dem Druckstück 10 reib-, form- oder stoffschlüssig hergestellt sein. Im ersten Fall durch Einpressen des Einsatzes und im letzten Fall beispielsweise durch Verkleben.

Bei dem in der Figur 3 gezeigten Beispiel ist das Druckstück 10 als Ring ausgebildet, mit einer in Richtung der Stellspindel 9 abgestuften Ausnehmung, in deren Bereich mit größerem Durchmesser das Formschlusselement 12 einliegt, während der Bereich mit kleinerem Durchmesser ein Druckstücklager 15 umschließt, mit dem sich das Druckstück 10 verdrehbar an einem stirnseitig an der Stellspindel 9 vorgesehenen Zapfen 16 abstützt.

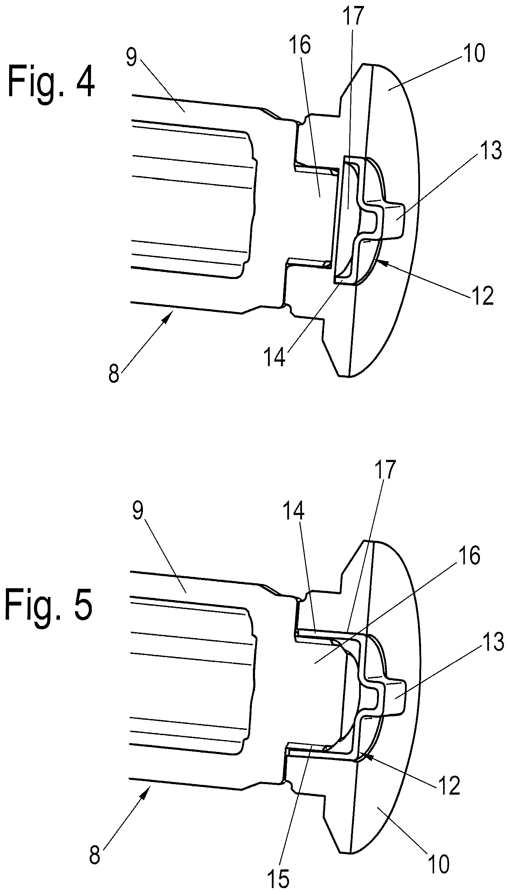

In der Figur 4 ist die Ausnehmung 17 als Sackloch ausgebildet, mit einer Trennung durch einen gebildeten Boden zum Zapfen 16.

Bei der Ausführung nach Figur 5 ist die Ausnehmung 17 im Druckstück 10 durchgehend zylindrisch ausgebildet, wobei die Wandung 14 des Formschlusselementes 12 mantelseitig vollflächig an der Wandung des Druckstücks 10 anliegt, während innenseitig das Druckstücklager 15 angeordnet ist, das auf dem Zapfen 16 geführt ist.

Bei allen gezeigten Ausführungsbeispielen ist gewährleistet, dass das Druckstück 10 und damit das Formschlusselement 12 verdrehbar an der Stellspindel 9 gehalten ist, so dass das Formschlusselement 12 gegenüber der Belagträgerplatte 5 bei einer Verdrehung der Stellspindel 9 zum Ausgleich eines Lüftspiels zwischen dem Bremsbelag 3 an der Belagträgerplatte 5 fest positioniert bleibt.

### Bezugszeichenliste

- 1: Bremssattel
- 2: Bremsscheibe
- 3: Bremsbelag
- 4: Bremsträger
- 5: Belagträgerplatte
- 6: Reibbelag
- 7: Zuspanneinrichtung
- 8: Bremsstempel
- 9: Stellspindel
- 10: Druckstück
- 11: Brücke
- 12: Formschlusselement
- 13: Profilierung
- 14: Wandung
- 15: Druckstücklager
- 16: Zapfen
- 17: Ausnehmung

## Patentansprüche

1. Scheibenbremse für ein Nutzfahrzeug, mit einem eine Bremsscheibe (2) umfassenden Bremssattel (1) und einer im Bremssattel (1) angeordneten Zuspanneinrichtung (7), die mindestens einen Bremsstempel (8) aufweist, mit einer Stellspindel (9) und einem stirnseitigen Formschlusselement (12), das in eine Profilierung einer Belagträgerplatte (5) eines bei einer Bremsung an die Bremsscheibe (2) anpressbaren Bremsbelages eingreift, wobei das Formschlusselement (12) aus einem austauschbaren Einsatz besteht, der mindestens eine Profilierung (13) aufweist und in eine Ausnehmung (17) eines auf seiner der Belagträgerplatte (5) zugewandten Seite als glatte Fläche ausgebildete, drehbar an der Stellspindel (9) befestigten Druckstücks (10) eingelassen ist, wobei die Profilierung (13) gegenüber der angrenzenden Fläche des Druckstücks (10) erhaben ist, **dadurch gekennzeichnet, dass** die Wandung des als topfartiger Einsatz ausgebildeten, in das Druckstück (10) eingelassenen und damit form-, reib- oder stoffschlüssig verbundenen Formschlusselementes (12) mantelseitig an der Ausnehmung (17) des Druckstücks (10) und mit seiner Innenseite an einer Druckstücklagerung (15) anliegt, die auf einem stirnseitig an der Stellspindel (9) vorgesehenen Zapfen (16) gehalten ist.

2. Scheibenbremse nach Anspruch 1, **dadurch gekennzeichnet, dass** das Formschlusselement (12) mit dem Druckstück (10) verpresst oder verklebt ist.

3. Scheibenbremse nach Anspruch 1 oder 2, **dadurch gekennzeichnet, dass** die Ausnehmung (17) zur Aufnahme des Formschlusselementes (12) als Stufenbohrung, zylindrische Durchgangsbohrung oder als Sackloch ausgebildet ist.

4. Scheibenbremse nach einem der vorhergehenden Ansprüche, **dadurch gekennzeichnet, dass** aus einer auf die Innenseite der Wandung des Formschlusselementes (12) und/oder des Zapfens (16) aufgebrachten Gleitschicht besteht.

5. Scheibenbremse nach einem der vorhergehenden Ansprüche, **dadurch gekennzeichnet, dass** das Formschlusselement (12) aus einem magnetischen oder unmagnetischen Material besteht.

## Claims

1. A disc brake for a utility vehicle, with a brake caliper (1) comprising a brake disc (1) and a brake application device (7) arranged in the brake caliper (1) and exhibiting at least one brake plunger (8), with an adjusting spindle (9) and a front end form-fitting element (12) engaging into a profile of a pad carrier plate (5) which can be pressed against the brake disc (2) during braking, wherein the form-fitting element (12) is composed of an exchangeable insert exhibiting at least one profiling (13) and being embedded in a recess (17) of a pressure piece (10) formed as a smooth surface on its side facing the pad carrier plate (5) and being attached to the adjusting spindle (9) so as to be rotatable, with the profiling (13) being raised with respect to the pressure piece's (10) adjacent surface, **characterized in that** the wall of the form-fitting element (12) that is formed as a cup-like insert, embedded in the pressure piece (10), and connected thereto in a form-fit, friction-fit or material-fit manner, rests against the pressure piece's (10) recess (17) on the shell side and against a pressure piece bearing (15) with its inner side, which pressure piece bearing is held on a pin (16) provided on the front end of the adjusting spindle (9).

2. The disc brake according to claim 1, **characterized in that** the form-fitting element (12) is pressed or glued together with the pressure piece (10).

3. The disc brake according to claim 1 or 2, **characterized in that** the recess (17) for receiving the form-fitting element (12) is formed as a stepped bore, a cylindrical through-hole or a blind hole.

4. The disc brake according to any one of the preceding claims, **characterized in that** the pressure piece bearing (15) is composed of a sliding layer applied to the inner side of the wall of the form-fitting element (12) and/or of the pin (16).

5. The disc brake according to any one of the preceding claims, **characterized in that** the form-fitting element (12) is made of a magnetic or nonmagnetic material.

## Revendications

1. Frein à disque pour un véhicule utilitaire, avec un étrier de frein (1) comprenant un disque de frein (2) et un dispositif de serrage (7) disposé dans l'étrier de frein (1) et présentant au moins un poinçon de frein (8), avec une broche de réglage (9) et un élément de complémentarité de forme (12) côté frontal qui s'engage dans un profilé d'une plaque porte-garniture (5) d'une garniture de frein pouvant être appuyée contre le disque de frein (2) en cas de freinage, sachant que l'élément de complémentarité de forme (12) est composé d'un insert échangeable qui présente au moins un profilé (13) et est encastré dans un évidement (17) d'une pièce de pression (10) constituée comme surface lisse de son côté tourné vers la plaque porte-garniture (5) et fixée à la broche de réglage (9) de façon à pouvoir tourner, sachant que le profilé (13) est surélevé par rapport à la surface contiguë de la pièce de pression (10), **caractérisé en ce que** la paroi de l'élément de complémentarité de forme (12) constitué comme insert de type pot, encastré dans la pièce de pression (10) et relié à celle-ci par complémentarité de forme, par adhérence ou par liaison de matière est située côté virole contre l'évidement (17) de la pièce de pression (10) et par son côté intérieur contre un logement de pièce de pression (15) qui est maintenu sur un tourillon (16) prévu côté frontal au niveau de la broche de réglage (9).

2. Frein à disque selon la revendication 1, **caractérisé en ce que** l'élément de complémentarité de forme (12) est comprimé ou collé à la pièce de pression (10).

3. Frein à disque selon la revendication 1 ou 2, **caractérisé en ce que** l'évidement (17) destiné à loger l'élément de complémentarité de forme (12) est constitué comme alésage étagé, alésage traversant cylindrique ou trou borgne.

4. Frein à disque selon l'une des revendications précédentes, **caractérisé en ce que** le logement de pièce de pression (15) se compose d'une couche de glissement apposée sur le côté intérieur de la paroi de l'élément de complémentarité de forme (12) et/ou du tourillon (16).

5. Frein à disque selon l'une des revendications précédentes, **caractérisé en ce que** l'élément de complémentarité de forme (12) se compose d'un matériau magnétique ou non magnétique.
